# EUROPEAN PATENT APPLICATION

(11) **EP 3 059 500 A1**
(43) Date of publication of application: **24.08.2016**
(21) Application number: 15155956.4
(22) Date of filing: 20.02.2015
(51) Int. Cl.: F23R 3/34, F23D 14/32

(54) **METHOD FOR OPERATING A COMBUSTION SYSTEM**

(71) Applicant: Siemens Aktiengesellschaft, 80333 München (DE)
(72) Inventor: Öfverstedt, Tomas, 58248 Linköping (SE)

(57) **Abstract**

The present invention relates to a method for operating a combustion system (10) of a combustion section (12) of a gas turbine engine (14) comprising at least one main burner arrangement (16) and at least one pilot burner arrangement (18), wherein the at least one main burner arrangement (16) and the at least one pilot burner arrangement (18) are operated with an air-fuel mixture (20), wherein the method comprises the step(s) of: Enriching an air (22) of the air-fuel mixture (20) of the at least one pilot burner arrangement (18) and/or a fuel (24) of the air-fuel mixture (20) of the at least one pilot burner arrangement (18) and/or the air-fuel mixture (20) of the at least one pilot burner arrangement (18) with oxygen (26) and preferably with pure oxygen (26).

## Description

### Field of the Invention

The present invention relates to a method for operating a combustion system of a combustion section of a gas turbine engine comprising at least one main burner arrangement and at least one pilot burner arrangement, wherein the at least one main burner arrangement and the at least one pilot burner arrangement are operated with an air-fuel mixture. The present invention further relates to a combustion system as well as to a combustion system embodied to perform the inventive method and to a gas turbine engine with such a combustion system.

### Background to the Invention

In a gas turbine engine a working fluid, like air, being compressed by a compressor enters a burner section where combustion of a mixture of the working fluid and a fuel occurs. The resulting combustion gas drives a turbine through the expansion and deflection of the gas through the turbine of the gas turbine engine. The turbine work or a part thereof, is transferred to the compressor through an interconnecting shaft.In order to achieve a reliable combustion a main flame in the combustion chamber had to be stable and robust. So that the combustion system regains its optimal performance the main flame has to be stabilized. Different methods are known to stabilise the main flame. One is to operate the main flame at a high temperature, like above 1200°C. Disadvantageously, this generates high und harmful amounts of combustion byproducts.

Thus, to provide a combustion system with low emissions, there is a need to achieve a lower overall temperature of the combustion. Lower temperatures can be achieved by burning lean air-fuel mixtures. However, such lean flames can be very unstable and only small changes in the equivalence ration can cause a disadvantage and troublesome flame out. From EP 1 110 034 A1 it is known to endow the combustion system with a so called pilot burner, which provides a flame with a high temperature to ignite and stabilize the low temperature main flame. According to the high temperature of the pilot burner flame the overall performance of the combustion system, like temperature or waste emission, is affected negatively. This is especially beneficial for so called DLE-combustion systems (dry low emission). An oxygen mole fraction is about 21% in air but in some cases the oxygen content in the air used for combustion may be decreased. Such applications could be for example a gas turbine equipped with flue gas recirculation, a gas turbine in a process that extracts oxygen from the air or some other process that reduces the oxygen content. In an environment with low oxygen content the pilot flame loses its stabilizing effect. The adiabatic flame temperature decreases in low oxygen environment as more air is needed and thus more mass for the flame to heat. Consequently, the performance of the combustion system and hence the gas turbine engine is unstable and unreliable.

It is a first objective of the present invention to provide a method for operating a combustion system of a gas turbine engine with a stabilized main flame and that results in a high efficient low emission combustion performance.

It is a further objective of the present invention to provide a combustion system as well as a gas turbine engine, which can be operated with a stabilized main flame and which can perform high efficient low emission combustion.

A still further objective of the present invention is to provide a combustion system embodied to perform the inventive method to achieve an operation with a stabilised main flame as well as a combustion process with low emissions.

These objectives may be solved by a method, a combustion system and a gas turbine engine according to the subject-matter of the independent claims.

### Summary of the Invention

Accordingly, the present invention provides a method for operating a combustion system of a combustion section of a gas turbine engine comprising at least one main burner arrangement and at least one pilot burner arrangement, wherein the at least one main burner arrangement and the at least one pilot burner arrangement are operated with an air-fuel mixture.

It is proposed that the method comprises the step of: Enriching an air of the air-fuel mixture of the at least one pilot burner arrangement and/or a fuel of the air-fuel mixture of the at least one pilot burner arrangement and/or the air-fuel mixture of the at least one pilot burner arrangement with oxygen, preferably with pure oxygen.

Due to this, a stabilizing effect of the pilot flame in low oxygen content air combustion can be gained and increased in comparison with a method operating state of the art systems. The oxygen content of the combustion air for the main burner arrangement can be held lower than with a method used for state of the art systems as it is only the pilot flame that needs extra oxygen, what saves also costs. Moreover, the method allows the overall performance of the combustion system and hence the gas turbine engine to be reliable and effective.

Even if the terms "combustion section, main burner arrangement, pilot burner arrangement, air-fuel mixture, fuel, compressor section, valve, mixing device and feed line" are used in the singular or in a specific numeral form in the claims and the specification the scope of the patent (application) should not be restricted to the singular or the specific numeral form. It should also lie in the scope of the invention to have more than one or a plurality of the above mentioned structure(s).

A gas turbine engine is preferably a whole plant, with at least a compressor section, a combustion section and a turbine section, further sections or devices may be provided. A main burner arrangement is intended to mean a functional arrangement and/or spatial assembly of pieces taking part of and/or assisting, building and/or participating in a combustion process, like an injector, a mixing device (swirler, premixer, mixer or parts thereof) or the like. A pilot burner arrangement is intended to means a functional arrangement and/or spatial assembly of pieces purposefully provided and/or constructed to assist the main burner arrangement and especially, to stabilise the main flame generated by the main burner arrangement. The pilot burner arrangement may be arranged as and/or comprise at least one central pilot burner and/or at least one external pilot burner, which are both known in the art.

An air-fuel mixture is intended to mean a mixture that is burnable in both burner arrangements. Preferably, it comprises at least oxygen and at least one kind of fuel. The oxygen may be provided by air having an amount of oxygen as well as other gases. Thus, the wording air-fuel mixture refers also to oxygen-fuel mixtures. To provide several different fuels in the air-fuel mixture may be also possible. A mixing ratio of air and fuel in the air-fuel mixture may be any ratio suitable for a person skilled in the art and may be selected for example in dependency of the fuel type, the burner(s) used or other characteristics of the combustion system or the gas turbine engine, respectively, like a mass flow. Moreover, the fuel may be any fuel suitable for a person skilled in the art, like a gaseous fuel or a liquid fuel. Furthermore, it may be also feasible to provide a further compound in the air-fuel mixture, like a stabilizer. The air and/or the fuel of the air-fuel mixture and the mixture itself as well as a combustion gas resulting from the combustion of the air-fuel mixture can be also named as a working fluid. The air-fuel mixture is intended to be burned by the main burner arrangement or by the pilot burner arrangement. The air-fuel mixture can be the same for both burner arrangement but normally the air-fuel mixture of the main burner arrangement and the pilot burner arrangement differ from one another.

The term "enrich" should be also understood as "supplement, add and/or dope". In the focus of "oxygen" should lay a mixture of oxygen with at least one other compound or substance, wherein the oxygen content of this mixture should be higher than 75% of the mixture. Preferably, the oxygen is pure oxygen, resulting in a known substance to add to the air-fuel mixture.

The oxygen may be added to at any location or time during the feeding process of the pilot burner arrangement. Thus, the oxygen may be added to the air beforehand of mixing the air with the fuel or it may be added to the fuel beforehand of mixing the fuel with the air or it may be added to both beforehand of the mixing of both or it may be added after the mixing of the air and the fuel to the air-fuel mixture. In case the oxygen is added to the air beforehand of the mixing with the fuel the air is an O₂-rich air or an O₂-enhanced working fluid. "O₂-rich or -enhanced" should be understood as with an oxygen content of about 18% to 30% and preferably as with an oxygen content close to atmospheric or of approximately 20% to 21%. It might be also possible to mix only the fuel with oxygen without adding O₂-lean air beforehand or after the mixing of the fuel with the oxygen. In such a case a mass flow of the O₂-lean air provided for the pilot burner arrangement would be 0. This might be controlled by a valve.

Furthermore, it is advantageous when the method further comprises the step of: Enriching the air of the air-fuel mixture of the at least one pilot burner arrangement and/or the fuel of the air-fuel mixture of the at least one pilot burner arrangement and/or the air-fuel mixture of the at least one pilot burner arrangement with oxygen so that an oxygen content of the air-fuel mixture burned by the at least one pilot burner arrangement is at least 5% higher than an oxygen content of the air feed to the at least one pilot burner arrangement beforehand of a mixing with the oxygen. This ensures a proper ignition of the pilot flame and a stabilised combustion process. In this context, the air feed to the pilot burner arrangement is the air being provided to the pilot burner arrangement beforehand of all mixing processes (with oxygen and/or with fuel). The described and beneficial effects can be even more enhanced, when the oxygen content is at least 8% or preferably at least 10% higher.

Preferably, the method further comprises the step of: Operating the at least one main burner arrangement with O₂-lean air. Thus, advantageously only the air/fuel/air-fuel mixture provided for the pilot burner arrangement has to be substituted with oxygen, reducing the overall costs since high percent and especially pure oxygen is expensive. In this context, "O₂-lean" should be understood as having a an oxygen content that is lower than the oxygen contend or air and/or that is lower than an conventional compressor feed stream and/or as having an oxygen content of about 16% to 10% or even less. Preferably, the at least one main burner arrangement is operated with air having an oxygen content that is less than 13% or even less than 10%.

In a further realisation of the invention the air of the air-fuel mixture of the at least one pilot burner arrangement beforehand of the mixing with oxygen is O₂-lean air. Thus, the addition of oxygen is especially effective, resulting in a stable combustion.

In an especially beneficial embodiment of the invention it is provided, that the method further comprises the step of: Providing the O₂-lean air from an oxygen-extraction process. By using this air as a working fluid of the combustion process the working fluid can be used for several processes, namely, as a working fluid of a compressor section, for an oxygen extraction or separation and for the combustion. Thus, the working fluid can advantageously be cycled back (from the compressor section via the extractor to the combustion section) to be used in the further process steps of the turbine engine. This reduces a need to freshly supply an equal amount of working fluid as that being withdrawn from the compressor section for the oxygen extraction.

As stated above, the resulting working fluid is O₂-lean with an oxygen content of about 16% to 10% or even less. Hence, in case of an O₂-rich fluid with up to 30% oxygen, the oxygen extraction process can extract up to 20% O₂-content and normally at least about 10% O₂-content. Generally, the extracted amount depends on the operating mode and what will be possible due to the process and the specifications of a used combustion system. A pressure level in the system especially before and after the oxygen extraction depends strongly on load, ambient conditions and the oxygen extraction process. An example for 100% load and 15°C ambient air temperature would be 20.2 bar(a) pressure before O₂ separation and 19.95 bar(a) after O₂ separation.

Thus, the extraction process is realised by using a cycling path/arrangement that is adapted to supply a compressed O₂-rich working fluid exiting the compressor section to an external unit for an oxygen extraction process and back feeding the O₂-lean working fluid to the turbine engine or the combustion chamber of the combustion section, respectively, to be burnt therein. The advantage of this concept is to use all gas turbine engine compressor working fluid for the oxygen process enabling high oxygen production. Furthermore, leading the processed working fluid back into the gas turbine engine advantageously enables the full performance of the gas turbine engine cycle.

In a further step of the invention the O₂-lean working fluid or the resulting air-fluid mixture is burnt by the main burner arrangement and the resulting combustion gas is expanded through a turbine of the turbine section for producing electricity. Hence, the height of the use of the oxygen extraction whit this gas turbine engine type is to gain a power production instead of power consumption while producing oxygen.

In a preferred embodiment of the invention the method further comprises the step of: Mixing the air of the - resulting - air-fuel mixture of the at least one pilot burner arrangement with the oxygen resulting in an O₂-enriched working fluid and further mixing the O₂-enriched working fluid with fuel resulting in the air-fuel mixture for operating the at least one pilot burner arrangement. Thus, an O₂-enriched working fluid that is homogenously mixed can be combined with the fuel.

Alternatively and/or additionally, the mixing sequence may be reversed. Mixing the oxygen first with the fuel of the resulting air-fuel mixture of the at least one pilot burner arrangement and the resulting O₂-fuel forking fluid subsequently with the air (O₂-lean). Moreover, it might be also possible to mix all three components - the air (O₂-lean), the fuel and the oxygen - simultaneously. The mixing may be facilitated with any means feasible for a person skilled in the art, like an active - driven - component or a passive component, like a selected construction of a part or piece that influences a flow path of the air/fuel/oxygen. This may be a specifically constructed wing or a spatial arrangement of such wings.

A mass flow of the air (O₂-lean) is not specifically controlled; it is dependent on the pressure drop over the burner arrangement(s) which depends on the engine load. However, the oxygen and fuel mass flow can be controlled by each feeding pressure. Hence, the method further comprises the step of: Determining a feeding pressure of the oxygen and/or determining a feeding pressure the fuel and, controlling a flame stability of a pilot flame of the at least one pilot burner arrangement due to the determined feeding pressure of the oxygen and/or the feeding pressure the fuel. Thus, two independent parameters can be used to influence the combustion process and the flame stability.

This can be easily done when the method comprises the step of: Controlling a feeding of an oxygen flow by at least one valve and/or controlling a feeding of a fuel flow by at least a further valve.

The oxygen content in the air, which is feed to the main burner arrangement and to the pilot burner arrangement can vary over time and might in some cases become as high as in a normal gas turbine operation. In such cases the oxygen flow can be eliminated. Thus, preferably, the method comprises the step of: Stopping a feeding of oxygen to the air of the air-fuel mixture of the at least one pilot burner arrangement and/or the fuel of the air-fuel mixture of the at least one pilot burner arrangement and/or the air-fuel mixture of the at least one pilot burner arrangement in case an oxygen content above 18% oxygen is detected in the air feed to the at least one pilot burner arrangement. In this case the pilot burner arrangement then works as a standard pilot burner arrangement. Hence, the combustion system is equipped with a pilot burner arrangement that can run both an oxy-fuel mode and as a standard pilot burner arrangement thus advantageously broadening the field of applications of the system.

In case the flow of oxygen is stopped there may be the risk that a flow of working fluid, like air, fuel and/or the air-fuel mixture might be reversed and there may be ingress of the oxygen into a feed line what is an disadvantage, especially when the feed line is blocked by it. Thus, the method advantageously comprises the step of: Purging an oxygen feed line with a flow medium in case an oxygen content above 18% oxygen is detected in the air feed to the at least one pilot burner arrangement. In other words, the oxygen flow is replaced by a small amount of purge medium, like purge air. The flow medium may be any medium feasible for a person skilled in the art, like nitrogen or air and preferably it is the same air as the air feed to the pilot burner arrangement - in this case, the air with the oxygen content above 18%.

The present invention further relates to a combustion system of a combustion section of a gas turbine engine comprising at least one main burner arrangement and at least one pilot burner arrangement, wherein the at least one main burner arrangement and the at least one pilot burner arrangement are operateable with an air-fuel mixture.

It is proposed that the combustion system is characterised by at least one mixing device that is able to enrich oxygen in an air of the air-fuel mixture of the at least one pilot burner arrangement and/or in a fuel of the air-fuel mixture of the at least one pilot burner arrangement and/or in the air-fuel mixture of the at least one pilot burner arrangement by mixing the air of the air-fuel mixture of the at least one pilot burner arrangement and/or the fuel of the air-fuel mixture of the at least one pilot burner arrangement and/or the air-fuel mixture of the at least one pilot burner arrangement with oxygen, preferably with pure oxygen.

Due to this, a stabilizing effect of the pilot flame in low oxygen content air combustion can be gained and increase in comparison with state of the art systems. The oxygen content of the combustion air for the main burner arrangement can be held lower than in state of the art systems as it is only the pilot flame that needs extra oxygen, what saves also costs. Moreover, the overall performance of the combustion system and hence the gas turbine engine is reliable and effective. Hence, the enrichment of the fluids can be achieved constructively easy. Moreover, by using a mixing device the mixing process can be realised homogeneously.

The supply of the different working fluids may be provided easily when the combustion system comprises at least one oxygen feed line, at least one air feed line and/or at least one O₂-enriched working fluid feed line and/or at least one fuel feed line.

According to a preferred refinement, the combustion system comprises an at least first mixing device that is positioned to be feed with oxygen by the at least one oxygen feed line and with air (in most cases O₂-lean) by the at least one air feed line. Hence, the oxygen and the air may be mixed homogenously beforehand of subsequent operational steps. A discharge from the at least first mixing device is the O₂-enriched working fluid.

It is furthermore provided that the combustion system comprises an at least second mixing device that is positioned to be feed with the O₂-enriched working fluid by the at least one O₂-enriched working fluid feed line and with fuel by the at least one air feed line. As a result, the mixture has a uniform composition which provides a continuous combustion. The mixing of the at least second mixing device results in the air-fuel mixture to operate the at least one pilot burner arrangement or in the air-fuel mixture being burned by it.

Consequently, the at least one feed line for the O₂-enriched working fluid is positioned between the first mixing device and the at least second mixing device.

A feed of an oxygen flow to the at least one oxygen feed line can be adjusted and thus controlled constructively easy when the combustion system comprises least one valve to control a feed of oxygen to the at least one feed line for the oxygen. Moreover, a feed of a fuel flow to the at least one fuel feed line can be influenced when the combustion system comprises least one further valve to control a feed of fuel to the at least one feed line for the fuel.

The invention further relates to an inventive combustion system for operating the inventive method or in other words, to an inventive combustion system being operated with the inventive method. Further, the invention relates to a gas turbine engine with at least one inventive combustion system.

The above-described characteristics, features and advantages of this invention and the manner in which they are achieved are clear and clearly understood in connection with the following description of exemplary embodiments which are explained in connection with the drawings.

### Brief Description of the Drawings

The present invention will be described with reference to drawings in which:
- FIG 1:: shows a schematically and sectional view of a part of a gas turbine engine unit with an upper half of a gas turbine engine and a unit for an oxygen extraction process,
- FIG 2:: shows in a perspective view a burner head of a combustion system of the gas turbine engine from FIG 1,
- FIG 3:: shows a sectional view through a part of a combustion chamber and the burner head of FIG 2,
- FIG 4:: shoes an enhanced view of a pilot burner arrangement of the burner head of FIG 2 and
- FIG 5:: shows a schematically and perspective view an exemplarily mixing device of the pilot burner arrangement of FIG 4.

### Detailed Description of the Illustrated Embodiments

The terms upstream and downstream refer to the flow direction of the airflow and/or working gas flow through the gas turbine engine 14 unless otherwise stated. If used and not otherwise specified, the terms axial, radial and circumferential are made with reference to a rotational axis 64 of the gas turbine engine 14.

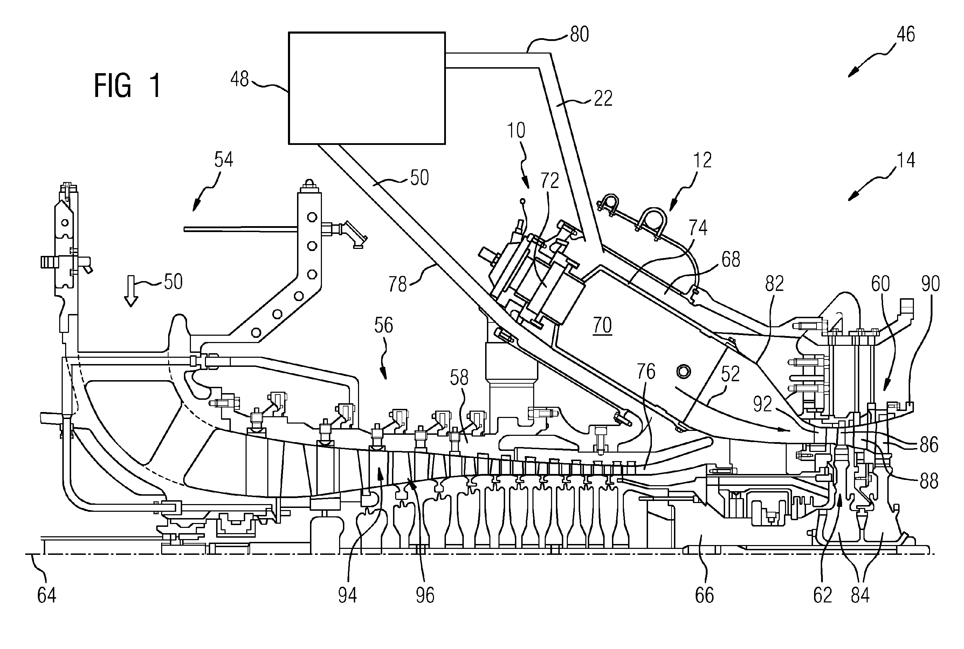

FIG 1 shows an example of a gas turbine engine unit 46 with a gas turbine engine 14 and a unit 48 for an oxygen extraction process in a sectional view. The gas turbine engine 14 comprises, in flow series of a working fluid, like air 22, 50 or a combustion gas 52, an air inlet 54 and a compressor section 56 with a compressor 58, a combustion section 12 with a combustion system 10 and a turbine section 60 with a turbine 62, which are generally arranged in flow series in the direction of a longitudinal or rotational axis 64. The gas turbine engine 14 further comprises a shaft 66 which is rotatable about the rotational axis 64 and which extends longitudinally through the gas turbine engine 14. The shaft 66 drivingly connects the turbine section 60 to the compressor section 56.

In operation of the gas turbine engine 14, air 50, which is taken in through the air inlet 54 is compressed by the compressor section 56 and delivered to the combustion section 12 or burner section. The compressed air 50 passing through the compressor section 56 is an O₂-rich working fluid with about 21% O₂ content. The combustion section 12 comprises a burner plenum 68, one or more combustion chambers 70 with a wall encasing the combustion chamber 70 and exemplarily one burner 72 fixed to the combustion chambers 70 defined by a double wall can 74 and at least one burner 72 fixed to each combustion chamber 70. The combustion chamber 70 and the burners 72 are located inside the burner plenum 68.

After traveling the compressor section 56 the O₂-rich flow medium or air 50 enters a diffuser 76 of the compressor section 56 and is discharged from the diffuser 76 into a channel 78 extending through the combustion section 12 and connecting the gas turbine engine 14 or the combustion section 12 with the unit 48 for the oxygen extraction process. The unit 48 for the oxygen extraction process is embodied in such a way to extract O₂ from the heated O₂-rich air 50. Therefore, the extraction unit 48 comprises for example an ion transport membrane to perform the oxygen extraction process (not shown in detail).

After the oxygen is extracted the now O₂-lean flow medium or air 22 has an O₂ content of approximately 13% to 14%, depending on the efficiency of the extraction process. The gas turbine engine unit 46 comprises a return channel 80 connecting the extraction unit 48 and the gas turbine engine 12. Hence, after the extraction process the O₂-lean flow medium or air 22 flows back to the gas turbine engine 14 travelling the return channel 80 to enter the combustion section 12. The channels 78 and 80 are sealed against one another to prevent a mixing of the O₂-rich air 50 and the O₂-lean air 22 (not shown in detail).

The O₂-lean air 22 entering the combustion chamber 70 or the burners 74, respectively, is mixed with a gaseous or liquid fuel 24 (details see below). The resulting air-fuel mixture 20 is then burned and a resulting combustion gas 52 or working gas from the combustion is channelled via a transition duct 82 to the downstream turbine section 60.

The turbine section 60 comprises a number of blade carrying discs 84 attached to the shaft 66. In the present example, the turbine section 60 comprises two discs 84 each carry an annular array of turbine blades 86. However, the number of blade carrying discs 84 could be different, i.e. only one disc 84 or more than two discs 84. In addition, guiding vanes 88 of a turbine cascade, which are fixed to a stator 90 of the gas turbine engine 14, are disposed between the turbine blades 86. Between the exit of the combustion chamber 70 and the leading turbine blades 86 inlet guiding vanes 94 are provided.

The combustion gas 52 from the combustion chamber 70 enters the turbine section 60 and drives the turbine blades 86 which in turn rotate the shaft 66. The guiding vanes 88, 92 serve to optimise the angle of the combustion or working gas 52 on to the turbine blades 86. The compressor section 56 comprises an axial series of guide vane stages 94 and rotor blade stages 96.

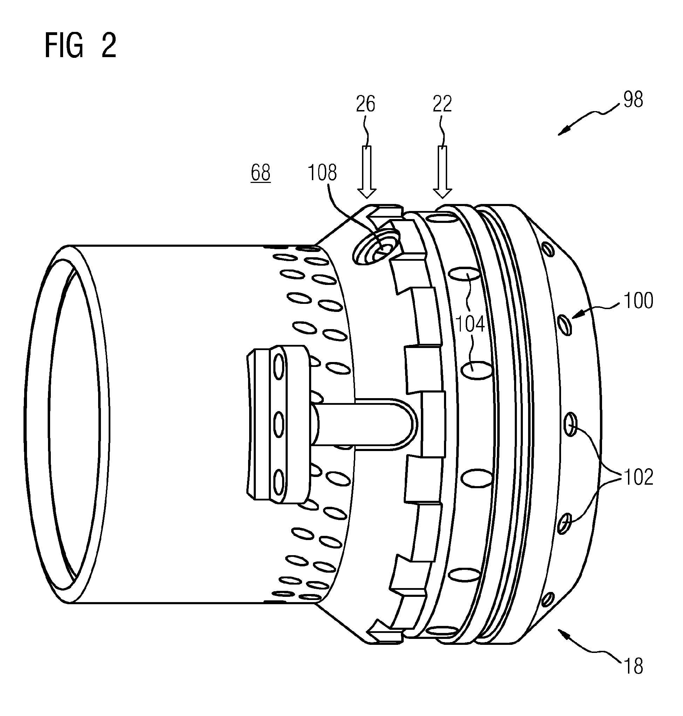

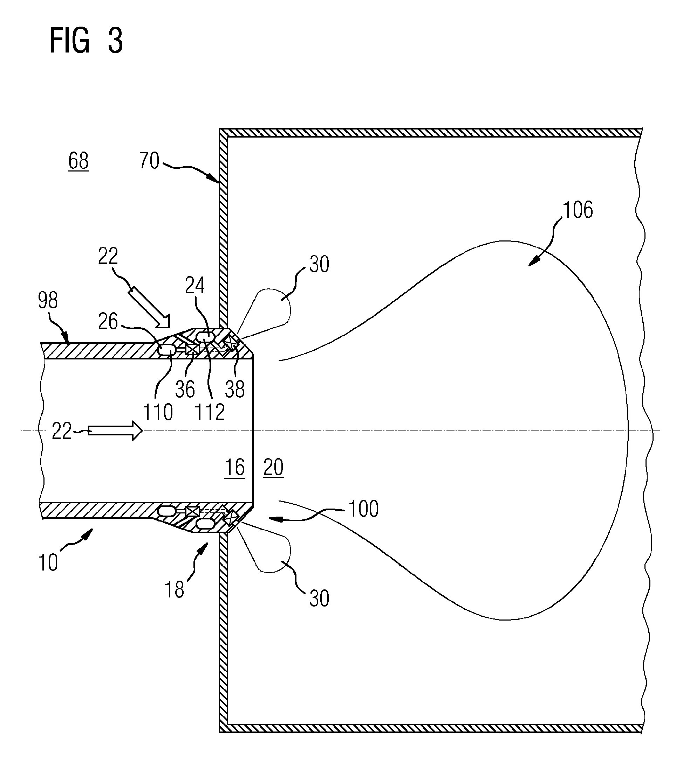

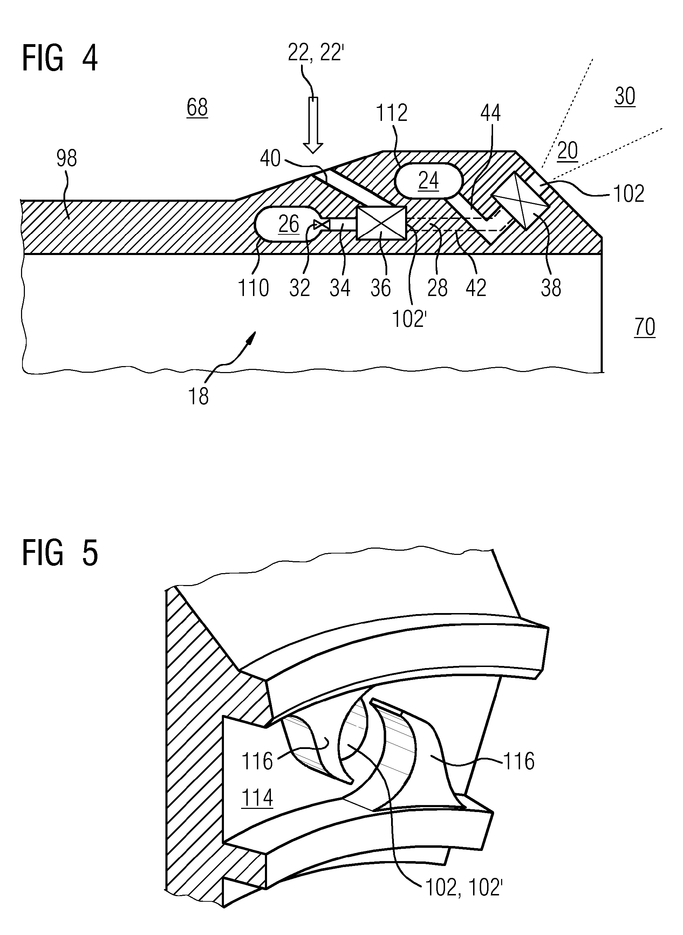

FIG 2 shows a burner head 98 of the combustion system 10 of the combustion section 12. The burner head 98 comprises a main burner arrangement 16 (see FIG 3) and a pilot burner arrangement 18 which are operateable with the air-fuel mixture 20 (see FIG 4). The pilot burner arrangement 18 comprises several pilot burners 100 each having an injection nozzle 102 to inject the air-fuel mixture 20 in to the downstream combustion chamber 70 for ignition in the pilot flame 30 (see FIG 3). O₂-lean air 22 is injected through holes 104 or similar from the burner plenum 68 into the pilot burner arrangement 18.

In FIG 3 the burner head 98 and a part of the combustion chamber 70 are shown in a simplified view. The main burner arrangement 16 is embodied as a central burner (not shown in detail) that is circumferentially surrounded by the pilot burners 100, which in turn are exemplarily embodied as external pilot burners 100. The main burner arrangement 16 and the pilot burner arrangement 18 are feed with the O₂-lean air 22 from the oxygen extraction process. To stabilise the main flame 106 resulting after ignition of an air fuel mixture 20 of the main burner arrangement 16 the pilot burner arrangement 18 is embodied selectively for this purpose. As stated above, the pilot burner arrangement 18 is feed with O₂-lean air 22. This may cause an unstable pilot flame 30 and the pilot burner 100 may lose his stabilising effect. By mixing the air 22 used for the pilot flame 30 with oxygen 26, especially with pure oxygen 26, a normal, 21% or higher oxygen mole fraction can be reached. Thus, the air 22 of the air-fuel mixture 20 of the pilot burner arrangement 18 beforehand of the mixing with oxygen 26 is O₂-lean air 22.

As can be seen in FIG 4, which shows an enhanced view of one pilot burner 100, the pilot burner arrangement 18 comprises a source for pure oxygen 26 and additional pieces to provide the oxygen 26 and to mix the oxygen 26 with the O₂-lean air 22. The oxygen 26 is provided through an orifice 108 (not shown in FIG 4, see FIG 2) for example from the unit 46 or another source, into a manifold 110 shared by all pilot burners 100.

For mixing of the oxygen 26 with the O₂-lean air 22 the combustion system 10 comprises a first mixing device 36 that is able to enrich oxygen 26 in the air 22 of the - resulting - air-fuel mixture 20 of the pilot burner arrangement 18. To provide the oxygen 26 and the air 22 for the first mixing device 36 the combustion system 10 comprises an oxygen feed line 34 and an air feed line 40, wherein the first mixing device 36 is positioned to be feed with oxygen 26 and with the O₂-lean air 22 by the respective feed line 32, 40. After the mixing an O₂-enriched working fluid 28 (air-oxygen mixture) is discharged from the first mixing device 36.

For mixing of the O₂-enriched working fluid 28 with the fuel 24 the combustion system 10 comprises a second mixing device 38. The O₂-enriched working fluid 28 is led via an O₂-enriched working fluid feed line 42 and the fuel 24 via a fuel feed line 44 to the second mixing device 38. The fuel 24 is provided from a separate manifold 112 shared by all pilot burners 100. The resulting air-fuel mixture 20 is than discharged from the second mixing device 38 to the nozzle 102 to be injected into the combustion chamber 70 where the oxidation process occurs in the pilot flame 30.

The main flame 106 is feed by an air-fuel mixture 20 that contains the same air 22 with reduced oxygen content (O₂-lean) as the air 22 feed to the pilot burner arrangement 18 but this mixture 20 is not doped with extra oxygen.

The first and second mixing devices 36, 38 can be embodied as a pre-mixer or as a swirler. In FIG 5 one embodiment of one useable mixing device is exemplarily shown. A mixing cavity 114 that receives the respective flow medium (air 22, oxygen 26; O₂-enriched working fluid 28, fuel 24) has two swirler wings 116 that are arranged in close proximity to the respective nozzle 102, 102' for injection in the combustion chamber 70 or the O₂-enriched working fluid feed line 42 (see FIG 4).

The method for operating the combustion system 10 comprises the following steps: Enriching the 02-lean air 22 of the air-fuel mixture 20 of the pilot burner arrangement 18 with oxygen 26 and preferably pure with oxygen 26, and specifically, enriching the air 22 of the air-fuel mixture 20 of the pilot burner arrangement 18 with oxygen 26 so that an oxygen content of the air-fuel mixture 20 burned by the pilot burner arrangement 18 is at least 5% higher or about 8% higher than an oxygen content of the air 22 feed to the pilot burner arrangement 18 beforehand of the mixing with the oxygen 26. Preferably, the air 22 is enriched so that the oxygen content of the resulting air-fuel mixture 20 is about 21%.

The mass flow of the air 22 is not specifically controlled. It is dependent on the pressure drop over the burner(s) which depends on the engine load. A mass flow of the oxygen 26 and a mass flow of the fuel 24 are controlled by each feeding pressure which gives two parameters to control the stability of the pilot flame 30 and thus the main flame 106. Hence, the method comprises the steps of: Determining a feeding pressure of the oxygen 26 and controlling a flame stability of the pilot flame 30 of the pilot burner arrangement 18 due to the determined feeding pressure of the oxygen 26. Thus, the combustion system comprises a sensor to detect the feeding pressure of the oxygen 26 (not shown) and a valve 32, located in or at the oxygen feed line 34, to control a feed of oxygen 26 to the feed line 34 for the oxygen 26.

It may be also possible to determine a feeding pressure of the fuel 24 by a sensor and to control the flame stability of the pilot flame of the pilot burner arrangement due to the determined feeding pressure the fuel 24. Therefore, a further valve may be located in or at the fuel feed line (not shown).

The oxygen content in the air 22' feed to the pilot burner arrangement 18 can vary over time and might in some cases become as high as in a normal gas turbine operation, e.g. 21%. In such cases the flow of oxygen 26 can be eliminated and replaced by a small amount of purge air 22'. The pilot burner 100 then works as a standard pilot burner. Hence, the method may comprise the step of: Stopping the feeding of oxygen 26 to the air 22 of the air-fuel mixture 20 of the pilot burner arrangement 18 in case an oxygen content above 18% oxygen is detected in the air 22' feed to the pilot burner arrangement 18. Moreover, in that case the method may comprise the further step of: Purging the oxygen feed line 34 with a flow medium, like the air 22'.

Alternatively, it may be possible to add the oxygen to the fuel or to mix the oxygen with the fuel and subsequently mix the resulting fuel-oxygen mixture with the O₂-lean air. It might be also possible to mix only the fuel with oxygen without adding O₂-lean air after the mixing of the fuel with the oxygen. In such a case a mass flow of the O₂-lean air provided for the pilot burner arrangement would be 0. This might be controlled by a valve. It may be also possible to add the oxygen to the already mixed air-fuel mixture (not shown).

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

Although the invention is illustrated and described in detail by the preferred embodiments, the invention is not limited by the examples disclosed, and other variations can be derived therefrom by a person skilled in the art without departing from the scope of the invention.

## Claims

1. Method for operating a combustion system (10) of a combustion section (12) of a gas turbine engine (14) comprising at least one main burner arrangement (16) and at least one pilot burner arrangement (18), wherein the at least one main burner arrangement (16) and the at least one pilot burner arrangement (18) are operated with an air-fuel mixture (20), wherein the method comprises the step(s) of:
- enriching an air (22) of the air-fuel mixture (20) of the at least one pilot burner arrangement (18) and/or a fuel (24) of the air-fuel mixture (20) of the at least one pilot burner arrangement (18) and/or the air-fuel mixture (20) of the at least one pilot burner arrangement (18) with oxygen (26) and preferably, with pure oxygen (26).

2. A method according to claim 1,
wherein the method further comprises the step(s) of:
- enriching the air (22) of the air-fuel mixture (20) of the at least one pilot burner arrangement (18) and/or the fuel (24) of the air-fuel mixture (20) of the at least one pilot burner arrangement (18) and/or the air-fuel mixture (20) of the at least one pilot burner arrangement (18) with oxygen (26) so that an oxygen content of the air-fuel mixture (20) burned by the at least one pilot burner arrangement (18) is at least 5% higher than an oxygen content of the air (22) feed to the at least one pilot burner arrangement (18) beforehand of a mixing with the oxygen (26).

3. A method according to claim 1 or 2,
wherein the method further comprises the step of:
- operating the at least one main burner arrangement (16) with O₂-lean air (22).

4. A method according to any preceding claim,
wherein the air (22) of the air-fuel mixture (20) of the at least one pilot burner arrangement (18) beforehand of the mixing with oxygen (26) is O₂-lean air (22).

5. A method according to preceding claim 3 or 4,
wherein the method further comprises the step of:
- providing the O₂-lean air (22) from an oxygen-extraction process.

6. A method according to any preceding claim,
wherein the method comprises the step of:
- mixing the air (22) of the air-fuel mixture (20) of the at least one pilot burner arrangement (18) with the oxygen (26) resulting in an O₂-enriched working fluid (28) and further
- mixing the O₂-enriched fluid (28) with fuel (24) resulting in the air-fuel mixture (20) for operating the at least one pilot burner arrangement (18).

7. A method according to any preceding claim,
wherein the method comprises the steps of:
- determining a feeding pressure of the oxygen (26) and/or determining a feeding pressure of the fuel (24) and,
- controlling a flame stability of a pilot flame (30) of the at least one pilot burner arrangement (18) due to the determined feeding pressure of the oxygen (26) and/or the feeding pressure of the fuel (24).

8. A method according to any preceding claim,
wherein the method comprises the step of:
- controlling a feeding of an oxygen flow by at least one valve (32).

9. A method according to any preceding claim,
wherein the method comprises the step of:
- stopping a feeding of oxygen (26) to the air (22) of the air-fuel mixture (20) of the at least one pilot burner arrangement (18) and/or the fuel (24) of the air-fuel mixture (20) of the at least one pilot burner arrangement (18) and/or the air-fuel mixture (20) of the at least one pilot burner arrangement (18) in case an oxygen content above 18% oxygen is detected in the air (22') feed to the at least one pilot burner arrangement (18).

10. A method according to any preceding claim,
wherein the method comprises the step of:
- purging an oxygen feed line (34) with a flow medium in case an oxygen content above 18% oxygen is detected in the air (22') feed to the at least one pilot burner arrangement (18).

11. Combustion system (10) of a combustion section (12) of a gas turbine engine (14) comprising at least one main burner arrangement (16) and at least one pilot burner arrangement (18), wherein the at least one main burner arrangement (16) and the at least one pilot burner arrangement (18) are operateable with an air-fuel mixture (20),
**characterised by** at least one mixing device (36, 38) that is able to enrich oxygen (26) in an air (22) of the air-fuel mixture (20) of the at least one pilot burner arrangement (18) and/or in a fuel (26) of the air-fuel mixture (20) of the at least one pilot burner arrangement (18) and/or in the air-fuel mixture (20) of the at least one pilot burner arrangement (18) by mixing the air (22) of the air-fuel mixture (20) of the at least one pilot burner arrangement (18) and/or the fuel (26) of the air-fuel mixture (20) of the at least one pilot burner arrangement (18) and/or the air-fuel mixture (20) of the at least one pilot burner arrangement (18) with oxygen (26), preferably with pure oxygen (26).

12. Combustion system according to claim 11,
**characterized by** at least one oxygen feed line (34), at least one air feed line (40) and/or at least one O₂-enriched working fluid feed line (42) and/or at least one fuel feed line (44), wherein an at least first mixing device (36) is positioned to be feed with oxygen (26) by the at least one oxygen feed line (34) and with air (22) by the at least one air feed line (40) and/or wherein an at least second mixing device (38) is positioned to be feed with the O₂-enriched working fluid (28) by the at least one O₂-enriched working fluid feed line (42) and with fuel (24) by the at least one air feed line (44).

13. Combustion system according to claim 11 or 12, **characterised by** at least one valve (32) to control a feed of oxygen (26) to the at least one feed line (34) for the oxygen (26).

14. Combustion system (10) according to any one of claims 11 to 13 for operating the method according to any one of claims 1 to 10.

15. Gas turbine engine (14) with at least one combustion system (10) according to any one of claims 10 to 14.
